# EUROPÄISCHE PATENTSCHRIFT

(11) **EP 0 469 476 B1**
(45) Veröffentlichungstag und Bekanntmachung des Hinweises auf die Patenterteilung: **06.03.1996**
(21) Anmeldenummer: 91112576.3
(22) Anmeldetag: 26.07.1991
(51) Int. Cl.: H04N 1/32, H04M 1/65

(54) **Nachrichtenübertragungssystem mit Sprach-, Bilddaten- und Textdatenkommunikation zwischen Teilnehmereinrichtungen**
Information transmission system with speech, image and text data communication between subscriber units
Système de transmission d'information avec communication de la parole, d'images et de données de texte entre unités d'abonnés

(30) Priorität: 30.07.1990 DE 4024102
(43) Veröffentlichungstag der Anmeldung: 05.02.1992
(73) Patentinhaber: GRUNDIG E.M.V. Elektro-Mechanische Versuchsanstalt Max Grundig GmbH & Co. KG, D-90762 Fürth (DE)
(72) Erfinder: Mittelstädt, Rainer, Grundig E.M.V., Kurgartenstrasse 37, W-8510 Fuerth (DE); Terkowski, Jürgen, Grundig E.M.V., Kurgartenstrasse 37, W-8510 Fuerth (DE)

(56) Entgegenhaltungen:
- EP-A- 0 364 867
- EP-A- 0 373 921
- DE-A- 3 107 271
- DE-A- 3 721 047
- DE-A- 3 844 425
- US-A- 4 652 934
- US-A- 4 868 865
- PATENT ABSTRACTS OF JAPAN vol. 14, no. 205 (E-921)26. April 1990 & JP-A-2 044 958
- PATENT ABSTRACTS OF JAPAN vol. 13, no. 346 (E-798)3. August 1989 & JP-A-1 106 556
- PATENT ABSTRACTS OF JAPAN vol. 13, no. 317 (E-789)19. Juli 1989 & JP-A-1 086 671

## Beschreibung

Die Erfindung betrifft Nachrichtenübertragungssysteme mit Sprach-, Bilddaten- und Textdatenkommunikation zwischen Teilnehmereinrichtungen gemäß den Oberbegriffen der Patentansprüche 1 und 2.

In allen Wirtschaftsbereichen, vor allen Dingen im Bürobereich und in der Verwaltung, werden Textinformationen und neuerdings auch Bildinformationen erfaßt, bearbeitet, archiviert und zu einem Empfänger übertragen. Moderne Teilnehmereinrichtungen sind dabei in allen Bürobereichen zu einem wichtigen Hilfsmittel beim Abwickeln der vielfältigen und unterschiedlichen Aufgaben geworden, wobei im zunehmenden Maße am selben Ort Gerätekombinationen, insbesondere Fernsprechapparate, Anrufbeantworter, Telekopierer usw., über eine Hauptanschlußleitung an das Nachrichtennetz angeschlossen werden. Diese Teilnehmergeräte (Endgeräte) werden vom Benutzer entsprechend dem Kommunikationswunsch, d.h. Sprach-, Bilddaten- und Textdatenkommunikation, betrieben.

Aus der DE-C- 29 51 550 ist eine Anordnung zur Ferneinschaltung und Fernabschaltung von elektrischen Geräteeinheiten, insbesondere Rechenanlagen, bekannt. Eine Zentralstation ist über eine Standard-Schnittstellenübertragungssteuerung, ein Modem und eine Standard-Fernmeldeleitung und/oder Standard-Datenleitung mit den Außenstationen zur Datenfernübertragung verbindbar. Hierzu wird beispielsweise von einer automatischen Wähleinrichtung des Zentralrechners eine Verbindung zum Modem der Außenstationen aufgebaut. Ist die Verbindung zwischen den beiden Modems hergestellt und ist in der Zentralstation vom Modem der Außenstation ein Bestätigungssignal empfangen worden, so werden vom Zentralrechner digitale Steuersignale und Nachrichten abgegeben. Diese gelangen zu einer in der Außenstation nach dem Modem angeordneten, ferngesteuerten Stromversorgungseinrichtung. Die Zentralstation erzeugt und sendet dabei eine sich selbst und die einzuschaltende Geräteeinheit kennzeichnende, codierte Nachricht (Zustandsmeldungsaufforderung). Zur Überprüfung der Verfügbarkeit der Geräteeinheiten muß die Zustandsrückmeldung bestätigt werden, wozu die von der Zentralstation an die Außenstation gesendete Nachricht in der Außenstation einem Zeitgeber zugeführt wird. Der Zeitgeber trennt die Verbindung zwischen Außenstation und Zentralstation, wenn nicht innerhalb der vorgegebenen Zeitspanne die Verfügbarkeit feststellbar ist. Hierzu enthält die Außenstation einen eine vorgegebene Signalfolge (Nachricht) erzeugenden, programmierbaren Festwertspeicher, sowie einen Komparator, der die empfangene codierte Signalfolge (Nachricht) mit jener des Festwertspeichers vergleicht. Ist innerhalb des vorgegebenen Zeitintervalls von beispielsweise 100 ms eine Übereinstimmung bei allen Zeichen feststellbar, so wird die Stromversorgungseinrichtung der Außenstation eingeschaltet.

Mit einer solchen Anordnung ist es möglich, die auf Magnetband, Magnetplatte, Lochstreifen oder -karten, Floppydisk usw. aufgezeichneten Daten dann zu übertragen - z.B. in der Nacht oder an den Wochenenden - wenn die Verkehrsbelastung der Nachrichtennetze nicht so hoch ist und die Gebühren relativ niedrig sind. Weiterhin werden die Rechenanlagen bzw. Geräteeinheiten in den Außenstationen nur dann eingeschaltet, wenn eine Datenfernübertragung stattfinden soll. Die Zentralstation und die Außenstationen sind zur Erzeugung und Auswertung der Zustandsmeldungsaufforderung in besonderer Weise ausgestaltet.

Weiterhin ist aus der DE-A- 37 21 047 ein Kommunikationssteuerverfahren bekannt, bei dem in einem ersten Verfahrensschritt eine Verbindung über das öffentliche Fernsprechnetz zwischen einer rufenden Station und einer gerufenen Station hergestellt wird. In einem zweiten Verfahrensschritt wird durch Tastenbetätigung in der rufenden Station der Übertragungsmode ausgewählt. Um eine Übertragung von Nachrichten zwischen Telefonapparaten, Teletex-Geräten, Personal-Computern, Faksimile-Geräten oder ähnlichem zu ermöglichen, enthält das Verbund-Kommunikationsendgerät unter anderem eine Systemsteuereinheit. Die Systemsteuereinheit steuert den Betrieb des gesamten Verbund-Kommunikationsendgeräts und wickelt verschiedene Kommunikations- und Übermittlungsfunktionen, bzw. verschiedene Datenverarbeitungsoperationen ab. Außerdem weist das Verbund-Kommunikationsendgerät eine Kommunikationssteuereinheit auf, welche die Kommunikations-Prozedurschritte in verschiedenen Kommunikationsarten, wie beispielsweise eine Faksimile-, eine Teletex- und eine PC-Kommunikation, durchführen kann. In diesen Kommunikationsarten wird kein Rufton in der gerufenen Station erzeugt. Auch beim aus der DE-A- 37 21 047 bekannten Kommunikationssteuerverfahren ist ein in besonderer Weise ausgestaltetes Verbund-Kommunikationsendgerät erforderlich.

Gleiches gilt für einen aus der EP-A-0 310 001 bekannten Telekopierer. Der Telekopierer enthält unter anderem eine Kommunikationssteuerung und eine damit verbundene Steuereinrichtung, welche eine entsprechende Umschaltung der Kommunikationsart vornehmen. Dabei werden die von der rufenden Teilnehmereinrichtung empfangenen Steuersignale ausgewertet und deren Auftreten in bestimmten Zeitfenstern überwacht.

Aus der DE-A- 31 07 271 ist eine Zusatzeinrichtung für Anrufbeantworter und Fernkopierer bekannt, bei der zur Umschaltung der Kommunikationsart keine besondere Ausgestaltung von Anrufbeantworter und Fernkopierer erforderlich ist. Die rufende Teilnehmereinrichtung baut eine Sprechverbindung zum Anrufbeantworter auf. Mit der Schlußansage erzeugt der Anrufbeantworter ein Steuersignal, welches der Zusatzeinrichtung zugeführt wird. Das Steuersignal wird in der Zusatzeinrichtung verstärkt und dient zur Betätigung eines dort angeordneten Schalt-Relais, welches den Fernkopierer auf der Empfängerseite einschaltet.

Weiterhin ist aus der DE-C- 30 40 541 ein Telekopierer bekannt, bei dem eine Ferngespräch-Anmeldetaste zum Voranmelden eines Ferngesprächs nach der Bildsignal-Übertragung vorgesehen ist. Nach Beendigung der Bildsignal-Übertragung wird ein Gesprächsanforderungssignal (Tonfrequenzsignal) übertragen, auf dessen Empfang hin ein Rufsignal in der gerufenen Teilnehmereinrichtung (Kombination von Telekopierer und Fernsprechapparat) erzeugt wird. Die gerufene Teilnehmerstation quittiert das Gesprächsanforderungssignal, auf dessen Empfang hin auch im Telekopierer der rufenden Teilnehmereinrichtung ein Rufsignal erzeugt wird. Die Rufsignale in der rufenden bzw. gerufenen Teilnehmereinrichtung werden beim Betätigen einer Umschalttaste durch den Benutzer, d.h. Umschaltung von Fernkopieren auf Fernsprechen, beendet.

Schließlich ist aus der DE-A-38 44 425 ein Telekopierer bekannt, welcher einen Anrufbeantworter enthält. Zum Umschalten zwischen Anrufbeantworter- und Telekopiererbetrieb sind eine Steuereinrichtung und ein ein Ruftonsignal (Tonfrequenzsignal CNG) auswertender Empfänger vorgesehen. Die Steuereinrichtung erzeugt ebenfalls, wie die aus der DE-OS 31 07 271 bekannte Zusatzeinrichtung, am Ende der Ansage oder mit der Schlußansage ein Steuersignal, welches einer logischen Verknüpfungsschaltung zum Einschalten des Telekopierers auf der Empfängerseite zugeführt wird. Weiterhin wird das Tonfrequenzsignal CED (Kennung der gerufenen Teilnehmereinrichtung) erzeugt, welches zur rufenden Teilnehmereinrichtung übertragen wird. Zum Fernkopieren betätigt dann der Benutzer eine Taste an der rufenden Teilnehmereinrichtung oder dieser sendet automatisch das Ruftonsignal CNG, welches im mit der logischen Verknüpfungsschaltung verbundenen Empfänger ausgewertet wird.

Schließlich sind Funkrufdienste (Europäischer Funkrufdienst, Cityruf) oder Personensuchanlagen bekannt, bei denen zur raschen Benachrichtigung des Teilnehmers die Nachrichtenübertragung über einen Funkübertragungskanal zu einem tragbaren Funkrufempfänger erfolgt. Die Nachrichtenübertragung kann beim Cityruf in drei Rufklassen erfolgen: Nur-Ton für Tonfunkrufempfänger, die entsprechend wie beim Europäischen Funkrufdienst vier verabredete Signale empfangen können; Numeric für Numeric-Funkrufempfänger zum Empfang von bis zu 15 Ziffern oder Sonderzeichen; Alphanumeric für Alphanumeric-Funkrufempfänger zum Empfangen von Text (Ziffern- und Buchstaben-Folgen) bis zu achtzig Zeichen. Während bei den Funkrufdiensten das Funkrufnetz mit den öffentlichen, drahtgebundenen Telekommunikationsnetzen verbunden ist, ist in Personensuchanlagen in der Regel das Funkrufsystem mit einer Nebenstellenanlage verbunden.

Die Rufeingabe in Personensuchanlagen bzw. das Einleiten des Rufes kann von Bedienkonsolen, Fernsprechapparaten, Gegensprechanlagen, Alarmtasten (Türklinke, Feuermelder, Nottaste im Aufzug), Fernsteuerungskontakten (Sensoren, Detektoren, Thermostaten) usw. aus erfolgen. In der Zentrale des Funkrufsystems ist ein Speicher angeordnet, welcher u.a. ein Teilnehmerverzeichnis, eine dem Teilnehmer (Name) zugeordnete individuelle Rufnummer (meist identisch mit der Telefonnummer), Nachrichten (numerische, alphanumerische Informationen) und sonstige Informationen enthält. Sonstige Informationen geben dem Suchenden Auskunft darüber, wie der Teilnehmer gesucht werden kann, wer bei Rufumleitung den umgeleiteten Ruf erhalten soll usw. Je nach Ausgestaltung des Funkrufempfängers kann ebenso wie bei den bereits oben erwähnten Funkrufempfängern der Funkrufdienste, die zusammen mit dem Funkruf übertragene Nachricht akustisch und/oder optisch wiedergegeben werden.

Die verschiedenen Nachrichtenübertragungssysteme ermöglichen die Sprach-,Bilddaten- und Textdatenkommunikation zwischen entsprechend ausgestalteten Endgeräten, wobei moderne Endgeräte in der Regel einen im Endgerät angeordneten Mikroprozessor aufweisen, welcher die verschiedenen Funktionen der Endgeräte und/oder den Austausch vermittlungstechnischer Informationen zwischen Endgerät und Vermittlungsstellen des Nachrichtenübertragungssystems steuert. Weist die Teilnehmereinrichtung eine Endgerätekombination auf, so ist für einen Dienstübergang entweder eine besondere Ausgestaltung aller Endgeräte der Gerätekombination erforderlich oder der Dienstübergang erfolgt in zentralen Einrichtungen des speziell ausgestalteten privaten Nachrichtennetzes (z.B. Personensuchanlage). Durch eine besondere Ausgestaltung der Endgeräte der Gerätekombination kann die Erreichbarkeit eines gerufenen Teilnehmers, der unterwegs ist, verbessert werden, meist sind die hierfür erforderlichen Mikroprozessoren (Steuereinrichtungen) sehr aufwendig und bieten dennoch keinen hohen Benutzerkomfort.

Hinsichtlich des Kommunikationsprozesses ist es heute besonders wichtig, Informationen schnell zu erhalten und/oder weiterzureichen, auszuwerten und umzusetzen. Dabei soll das Nachrichtenübertragungssystem und die hier zum Einsatz kommenden Endgeräte so ausgestaltet sein, daß sich der Benutzer auch ohne spezielle Kenntnisse die von der Technik bereitgestellten Möglichkeiten für seine Aufgaben und Anwendungen nutzbar machen kann.

Aus der JP-A-20 44 958 ist eine Kombinationseinrichtung bekannt, die aus mehreren Kommunikationseinrichtungen für verschiedene Kommunikationsarten besteht, wobei die Kommunikationseinrichtungen über eine network control unit an eine Amtsleitung angeschlossen werden. Die Steuerung der angeschlossenen Kommunikationseinrichtungen erfolgt durch eine control section und eine operation section. Kommt in Abwesenheit des Benutzers ein Ruf an, wird dieser Ruf empfangen und eine Nachricht an den Ort, an dem sich der Benutzer aufhält weitergeleitet.

Dabei ist von Nachteil, daß die Kommunikationseinrichtungen speziell ausgestaltet sein müssen. um zu der Kombinationseinrichtung zusammengeschaltet werden zu können. Weiterhin sind mehrere Steuereinrichtungen erforderlich, um diese Funktionalität zu erreichen.

Aus der US-A-4,868,865 ist eine Schalteinrichtung für eine Amtsleitung bekannt, die erkennt, welche Kommunikationsart ein ankommender Ruf aufweist und abhängig davon eine Verbindung zu einem der angeschlossenen Endgeräte für diese Kommunikationsart durchschaltet. Hierfür wird das mit einer Telekopie übertragene CNG-Signal ausgewertet.

Hierbei ist von Nachteil, daß ein abwesender Benutzer nicht über das Nachrichtennetz von einem ankommenden Ruf informiert wird, bzw. ein ankommender Ruf nicht über das Nachrichtennetz weitergeleitet wird.

Der Erfindung liegt die Aufgabe zugrunde, ein Nachrichtenübertragungssystem derart auszugestalten, daß eine rasche und fehlerfreie Übermittlung von Nachrichten ermöglicht wird und daß der hierfür erforderliche Schaltungsaufwand aller Endgeräte der Gerätekombination möglichst gering ist.

Diese Aufgabe wird bei den gattungsgemäßen Nachrichtenübertragungssystemen durch die kennzeichnenden Merkmale der Patentansprüche 1 und 2 gelöst.

Die erfindungsgemäßen Nachrichtenübertragungssysteme nach Patentanspruch 1 und Patentanspruch 2 weisen den Vorteil auf, daß der Hinweis auf die eingegangene Nachricht automatisch erzeugt wird, wodurch ein hoher Benutzerkomfort erreicht wird. Weder bei dem Nachrichtenübertragungssystem gemäß Patentanspruch 1, bei dem die einzelnen Endgeräte an jeweils eine Hauptanschlußleitung des Nachrichtennetzes angeschlossen sind, noch bei dem Nachrichtenübertragungssystem gemäß Patentanspruch 2, bei dem die Gerätekombination über nur eine Hauptanschlußleitung mit dem Nachrichtennetz in Verbindung steht, ist es deshalb erforderlich, daß der Benutzer die Endgeräte auf eingegangene Nachrichten überwacht. Weiterhin ist von Vorteil, daß der Benutzer auf einfache Art und Weise festlegen kann, zu welcher Teilnehmereinrichtung (Endgerät) des Nachrichtenübertragungssystems der Hinweis und/oder die Nachricht über eine vermittelte Verbindung weitergeleitet werden soll (mail box, mobiles Büro usw.).

Das Nachrichtenübertragungssystem gemäß Patentanspruch 3 weist den Vorteil auf, daß für die Erzeugung des entsprechenden Hinweises bereits in modernen Anrufbeantwortern vorhandene Einrichtungen mitbenutzt werden können. Moderne Anrufbeantworter enthalten in der Regel einen Wählautomaten, welcher bei dem Anschluß von Geräten oder Anlagen, wie z.B. Homebus mit angeschlossener Heizung, Licht, Radio, Fernsehgerät oder Alarmanlage, es ermöglicht, eine Alarmmeldung über den europäischen Funkrufdienst zu einem Funkrufempfänger oder über das Fernsprechnetz zu einer bestimmten Teilnehmereinrichtung zu übermitteln.

Bei der Ausführungsform des Nachrichtenübertragungssystems nach Patentanspruch 4 erhält der gerufene Teilnehmer bereits zum Beginn der Nachrichtenübertragung einen Hinweis darauf, daß eine Telekopie eingegangen ist.

Die Ausführungsform des Nachrichtenübertragungssystem gemäß Patentanspruch 5, weist den Vorteil auf, daß der in der Anschlußeinrichtung erforderliche Schaltungsaufwand gering ist.

Die Ausführungsformen des Nachrichtenübertragungssystems nach den Patentansprüchen 6 und 7 ermöglichen die Vernetzung unterschiedlicher Endgeräte und erlauben auf einfache Art und Weise die Steuerung des Informationsaustausches. Durch den Zugriff auf Nachrichten, welche in einem der Endgeräte zwischengespeichert sind, ist es beispielsweise möglich, das Rundsenden von Nachrichten an Teilnehmereinrichtungen des Nachrichtenübertragungssystems zu steuern.

Die Erfindung wird im folgenden anhand in der Zeichnung dargestellten Ausführungsformen näher beschrieben und erläutert. Auch wenn im folgenden von der Gerätekombination mit Anrufbeantworter und Telekopierer und einer bestimmten Netzarchitektur ausgegangen wird, ist beim erfindungsgemäßen Nachrichtenübertragungssystem eine beliebige Vernetzung unterschiedlicher Endgeräte möglich. Es zeigen:
- Fig. 1: eine erste Ausführungsform des Nachrichtenübertragungssystems, bei dem die einzelnen Endgeräte jeweils an eine Hauptanschlußleitung angeschlossen sind und
- Fig. 2: eine zweite Ausführungsform, bei der die Gerätekombination über nur eine Hauptanschlußleitung mit dem Nachrichtennetz in Verbindung steht.

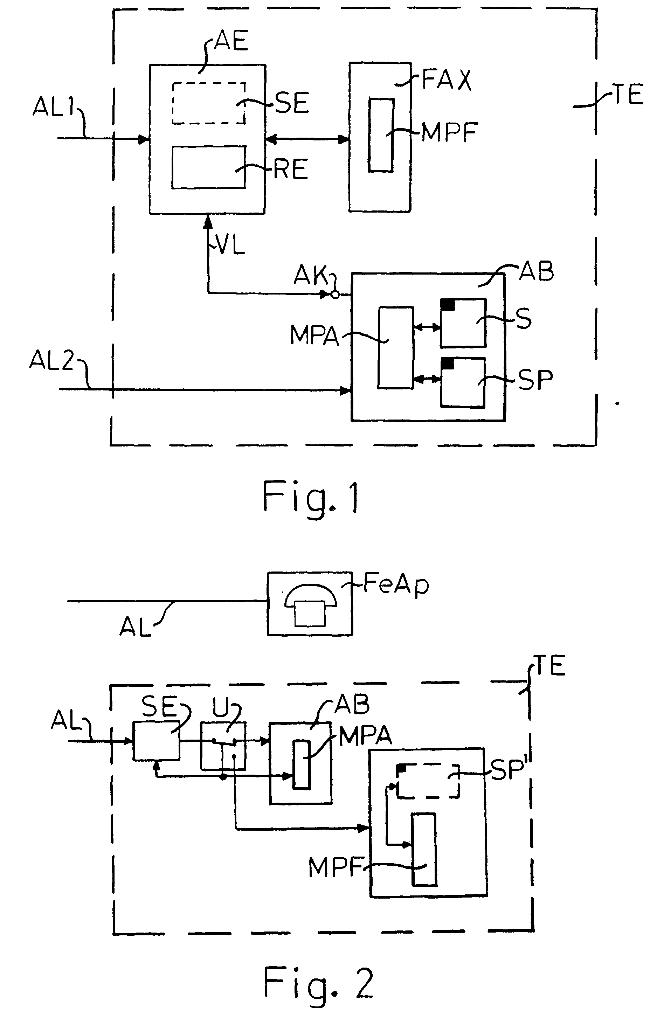

Bei der in der Fig. 1 dargestellten ersten Ausführungsform des Nachrichtenübertragungssystems besteht die gerufene Teilnehmereinrichtung TE aus der Kombination von Telekopierer FAX und Anrufbeantworter AB. Der Telekopierer FAX und der Anrufbeantworter AB sind jeweils an eine Hauptanschlußleitung AL1, AL2 des Nachrichtennetzes angeschlossen. Entsprechend dem Prinzip einer verteilten Steuerung leitet der Anrufbeantworter AB bei einem am Telekopierer FAX ankommenden Ruf automatisch einen Verbindungsaufbau zur Weiterleitung von Rufsignalen und/oder Nachrichten zu einer Teilnehmereinrichtung des Nachrichtenübertragungssystems ein. Hierzu ist in der Hauptanschlußleitung AL1 (zum Telekopierer FAX) eine Anschlußeinrichtung AE vor dem Telekopierer FAX angeordnet. Die Anschlußeinrichtung AE ist über ein Verbindungskabel VL an den Anrufbeantworter AB angeschlossen und weist mindestens eine Ruferkennungsschaltung RE auf. Anstelle oder zusätzlich zur Ruferkennungsschaltung RE kann in der Anschlußeinrichtung AE auch eine Schleifenstromerkennungsschaltung SE angeordnet sein, welche in Fig. 1 strichliniert dargestellt ist. Moderne Anrufbeantworter AB weisen in der Regel eine Alarmkontaktbuchse AK auf, welche zum Anschluß des Verbindungskabels VL benutzt werden kann.

Der Anrufbeantworter AB enthält einen Zwischenspeicher S zur Zwischenspeicherung der von der rufenden Teilnehmereinrichtung kommenden Nachrichten und/oder einen Hinweistextspeicher SP. Der Mikroprozessor MPA des Anrufbeantworters AB kann auch die Funktion eines Wählautomatens übernehmen und die hierfür erforderlichen Vermittlungsfunktionen ausführen. Anhand einer im Speicher S zwischengespeicherten Wählinformation (z.B. Telefonnummer) leitet der Mikroprozessor MPA über die zweite Hauptanschlußleitung AL2 einen zweiten Verbindungsaufbau ein. Beim Melden der gerufenen Teilnehmereinrichtung liest der Mikroprozessor MPA die im Zwischenspeicher S oder Hinweistextspeicher SP enthaltene Nachricht aus und steuert die Nachrichtenübertragung. Beim Melden des gerufenen Teilnehmers erhält dieser beispielsweise den Ansagetext: "Hier Anrufbeantworter, Telefonnummer ...: Es ist eine Telekopie eingegangen". Nach der Ansage wird durch den Mikroprozessor MPA die Verbindung ausgelöst. Es ist auch möglich, Speicher S und Zwischenspeicher SP zu einem Speicher zusammenzufassen. Die Eingabe der Nachricht kann in der Teilnehmereinrichtung TE vorab durch den Benutzer (Ansagetext) oder durch den rufenden Teilnehmer erfolgen.

Bei der in Fig. 2 dargestellten zweiten Ausführungsform des Nachrichtenübertragungssystems steht die Gerätekombination von Telekopierer FAX und Anrufbeantworter AB über nur eine Hauptanschlußleitung AL mit dem Nachrichtennetz in Verbindung. Der Anrufbeantworter AB ist dabei im Vorrang zum Telekopierer FAX geschaltet. Der im Anrufbeantworter AB angeordnete Mikroprozessor MPA ist mit einer in der Hauptanschlußleitung AL angeordneten Umschalteinrichtung U verbunden und stellt die Kommunikationsart fest. Wird beispielsweise von dem Mikroprozessor MPA ein Ruftonsignal für einen Telekopierer erkannt, so schaltet der Mikroprozessor MPA automatisch auf den Telekopierer FAX um und steuert die Erzeugung eines Ruftonsignals für den Telekopierer FAX. Mittels der Schleifenstromerkennungsschaltung SE kann der Mikroprozessor MPA überprüfen, ob ein Nachrichtenaustausch, d.h. die Übertragung der Telekopie, noch erfolgt oder nicht. Nach Beendigung des Nachrichtenaustausches zwischen rufender Teilnehmereinrichtung und Telekopierer FAX leitet der Mikroprozessor MPA automatisch einen Verbindungsaufbau zur Weiterleitung von Rufsignalen und/oder Nachrichten zu einer Teilnehmereinrichtung, beispielsweise dem Fernsprechapparat FeAp, ein.

Enthält der Telekopierer FAX einen Ansagespeicher SP', welcher in Fig. 2 strichliniert dargestellt ist, so kann der Mikroprozessor MPF ebenfalls die Funktion einer automatischen Wähl- und Ansageeinrichtung übernehmen. Nach Beendigung des Nachrichtenaustausches zwischen rufender Teilnehmereinrichtung und Telekopierer FAX leitet der Mikroprozessor MPF, wie bereits für den Mikroprozessor MPA beschrieben, einen Verbindungsaufbau zu einer Teilnehmereinrichtung, z.B. dem Fernsprechapparat FeAp, ein und liest beim Melden die im Ansagespeicher SP' zwischengespeicherte Nachricht aus.

Durch wiederholtes Ausführen der oben beschriebenen Funktionen wird erreicht, daß mindestens einer der Mikroprozessoren, z.B. MPF, das Rundsenden von Nachrichten an Teilnehmereinrichtungen des Nachrichtenübertragungssystems steuert, welche in einem der Endgeräte zwischengespeichert sind.

Das erfindungsgemäße Nachrichtenübertragungssystem ermöglicht auf überraschend einfache Art und Weise die Vernetzung beliebiger Endgeräte und ermöglicht die Sprach-, Bilddaten- und Textdatenkommunikation in unterschiedlich ausgestalteten Nachrichtennetzen für vermittelte Verbindungen, z.B. Fernschreibnetz, Datennetz, integriertes Digitalnetz, diensteintegriertes Nachrichtennetz, öffentliches bewegliches Landfunknetz (Autotelefonsystem) usw.

## Patentansprüche

1. Nachrichtenübertragungssystem mit Sprach-, Bilddaten- und Textdatenkommunikation zwischen systemeigenen Teilnehmereinrichtungen (TE), welche aus einer Gerätekombination von Endgeräten, insbesondere Fernsprechapparat (FeAp), Anrufbeantworter (AB) und Telekopierer (FAX) bestehen und welche mindestens einen in einem der Endgeräte angeordneten Mikroprozessor (MP) aufweisen, der die verschiedenen Funktionen der Endgeräte und/oder den Austausch vermittlungstechnischer Informationen zwischen Endgerät und Vermittlungsstellen des Nachrichtenübertragungssystems steuert, worin die gerufene Teilnehmereinrichtung aus der Kombination von Telekopierer (FAX) und Anrufbeantworter (AB) besteht, welche jeweils an eine Hauptanschlußleitung (AL1, AL2) des Nachrichtennetzes angeschlossen sind,
**dadurch gekennzeichnet**,
daß eine Anschlußeinheit (AE) mit der Anschlußleitung (AL1) des Telekopierers (FAX) verbunden und über ein Verbindungskabel (VL) an den Anrufbeantworter (AB) angeschlossen ist und daß entsprechend dem Prinzip einer verteilten Steuerung bei einem am Telekopierer (FAX) ankommenden Ruf der Anrufbeantworter (AB) automatisch eine vermittelte Verbindung zur Weiterleitung von Rufsignalen und/oder Nachrichten zu einer anderen Teilnehmereinrichtung des Nachrichtenübertragungssystems aufbaut.

2. Nachrichtenübertragungssystem mit Sprach-, Bilddaten- und Textdatenkommunikation zwischen systemeigenen Teilnehmereinrichtungen (TE), welche aus einer Gerätekombination von Endgeräten, insbesondere Fernsprechapparat (FeAp), Anrufbeantworter (AB) und Telekopierer (FAX) bestehen und welche mindestens einen in einem der Endgeräte angeordneten Mikroprozessor (MP) aufweisen, der die verschiedenen Funktionen der Endgeräte und/oder den Austausch vermittlungstechnischer Informationen zwischen Endgerät und Vermittlungsstellen des Nachrichtenübertragungssystems steuert, worin die gerufene Teilnehmereinrichtung aus der Kombination von Telekopierer (FAX) und Anrufbeantworter (AB) besteht, welche an eine gemeinsame Hauptanschlußleitung (AL) des Nachrichtennetzes angeschlossen sind,
**dadurch gekennzeichnet,**
daß nach hergestellter Verbindung zwischen der rufenden Teilnehmereinrichtung und einem im Vorrang geschalteten Endgerät, der diesem Endgerät zugeordnete Mikroprozessor (MPA), welcher mit einer in der Hauptanschlußleitung (AL) angeordneten Umschalteinrichtung (U) verbunden ist, die Kommunikationsart feststellt und, falls erforderlich, eine Umschaltung auf das der Kommunikationsart entsprechende Endgerät vornimmt und daß der Mikroprozessor (MPA) des in Vorrang geschalteten Endgeräts nach Detektion der Beendigung des Nachrichtenaustauschs zwischen rufender und gerufener Teilnehmereinrichtung (TE) durch eine Schleifenstromerkennungsschaltung (SE) automatisch eine vermittelte Verbindung zur Weiterleitung von Rufsignalen und/oder Nachrichten zu einer anderen Teilnehmereinrichtung des Nachrichtenübertragungssystems aufbaut.

3. Nachrichtenübertragungssystem nach Anspruch 1 oder 2,
**dadurch gekennzeichnet,**
daß der Anrufbeantworter (AB) einen Zwischenspeicher (S) zur Zwischenspeicherung der von der rufenden Teilnehmereinrichtung kommenden Nachricht und/oder einen Hinweistextspeicher (SP) aufweist und daß der Mikroprozessor (MPA) des Anrufbeantworters (AB) anhand einer in dem Speicher (S) zwischengespeicherten Wählinformation über die Hauptanschlußleitung (AL, AL2) einen zweiten Verbindungsaufbau einleitet und beim Melden der gerufenen Teilnehmereinrichtung die im Zwischenspeicher (S) oder Hinweistextspeicher (SP) enthaltene Nachricht ausliest und die Nachrichtenübertragung steuert.

4. Nachrichtenübertragungssystem nach Anspruch 1,
**dadurch gekennzeichnet**,
daß die Anschlußeinrichtung (AE) eine Ruferkennungsschaltung (RE) aufweist, und daß das Ausgangssignal der Ruferkennungsschaltung (RE) zum Mikroprozessor (MPA) des Anrufbeantworters (AB) über das Verbindungskabel (VL) übermittelt wird.

5. Nachrichtenübertragungssystem nach Anspruch 1,
**dadurch gekennzeichnet,**
daß die Anschlußeinrichtung (AE) eine Schleifenstromerkennungsschaltung (SE) aufweist und daß die Anschlußeinrichtung (AE) mit dem Verbindungskabel (VL) an eine Alarmkontaktbuchse (AK) des Anrufbeantworters (AB) angeschlossen ist.

6. Nachrichtenübertragungssystem nach Anspruch 2,
**dadurch gekennzeichnet,**
daß im Telekopierer (FAX) eine automatische Wähleinrichtung und ein damit verbundener Ansagespeicher (SP) angeordnet sind, daß bei einem ankommenden Ruf und nach Beendigung des Nachrichtenaustausches zwischen rufender Teilnehmereinrichtung und Telekopierer (FAX) die automatische Wähleinrichtung einen Verbindungsaufbau zu einer Teilnehmereinrichtung des Nachrichtenübertragungssytems einleitet und daß beim Melden der Teilnehmereinrichtung der Mikroprozessor (MPF) die im Ansagespeicher (SP') zwischengespeicherte Nachricht ausliest.

7. System nach einem oder mehreren der Ansprüche 1 bis 6,
**dadurch gekennzeichnet,**
daß mindestens einer der Mikroprozessoren (z.B. MPF) das Rundsenden von Nachrichten an Teilnehmereinrichtungen des Nachrichtenübertragungssystems steuert, welche in einem der Endgeräte zwischengespeichert sind.

## Claims

1. Communications system with speech, image-data and text-data communication between system-internal subscriber devices (TE) which comprise an appliance combination of terminals, in particular telephone set (FeAp), telephone answering machine (AB) and facsimile machine (FAX) and which has at least one microprocessor (MP) which is disposed in one of the terminals and which controls the various functions of the terminals and/or the exchange of switching information between terminal and switching centres of the communication system, wherein the called subscriber device comprises the combination of facsimile machine (FAX) and telephone answering machine (AB), which are connected in each case to a direct exchange line (AL1, AL2) of the communication network, characterized in that an attachment unit interface (AE) is connected to the direct exchange line (AL1) of the facsimile machine (FAX) and, via a connecting cable (VL), to the telephone answering machine (AB), and in that, in accordance with the principle of a distributed control, in the case of an incoming call to the facsimile machine (FAX), the telephone answering machine (AB) automatically sets up a switched connection for transferring call signals and/or messages to another subscriber device of the telecommunication system.

2. Communication system with speech, image-data and text-data communication between system-internal subscriber devices (TE) which comprise an appliance combination of terminals, in particular telephone set (FeAp), telephone answering machine (AB) and facsimile machine (FAX) and which have at least one microprocessor (MP) which is disposed in one of the terminals and which controls the various functions of the terminals and/or the exchange of switching information between terminal and switching centres of the communication system, wherein the called subscriber device comprises the combination of facsimile machine (FAX) and telephone answering machine (AB), which are connected to a common direct exchange line (AL) of the communication network, characterized in that, after a connection has been made between the calling subscriber device and a priority-connected terminal, the microprocessor (MPA) which is assigned to said terminal and which is connected to a changeover device (U) disposed in the direct exchange line (AL) determines the type of communication and, if necessary, carries out a changeover to the terminal corresponding to the type of communication and in that, after detection of the termination of the message exchange between calling and called subscriber device (TE) by means of a loop-current detection circuit (SE), the microprocessor (MPA) of the priority-connected terminal automatically sets up a switched connection for transferring call signals and/or messages to another subscriber device of the communication system.

3. Communication system according to Claim 1 or 2, characterized in that the telephone answering machine (AB) has a temporary store (S) for the temporary storage of the message coming from the calling subscriber device and/or an instruction-text memory (SP) and in that the microprocessor (MPA) of the telephone answering machine (AB) initiates a second connection setup via the direct exchange line (AL, AL2) on the basis of dialling information temporarily stored in the memory (S) and, when the called subscriber device answers, reads out the message contained in the temporary store (S) or instruction-text memory (SP) and controls the message transfer.

4. Communication system according to Claim 1, characterized in that the attachment unit interface (AE) has a call detection circuit (RE) and in that the output signal of the call detection circuit (RE) is communicated to the microprocessor (MPA) of the telephone answering machine (AB) via the connecting cable (VL).

5. Communication system according to Claim 1, characterized in that the attachment unit interface (AE) has a loop current detection circuit (SE) and in that the attachment unit interface (AE) is connected to the alarm contact socket (AK) of the telephone answering machine (AB) by means of the connecting cable (VL).

6. Communication system according to Claim 2, characterized in that an automatic dialling device and an announcement store (SP') are disposed in the facsimile machine (FAX), in that, in the case of an incoming call and after termination of the message exchange between calling subscriber device and facsimile machine (FAX), the automatic dialling device initiates a connection setup to a subscriber device of the telecommunication system, and in that, when the subscriber device answers, the microprocessor (MPF) reads out the message temporarily stored in the announcement store (SP').

7. System according to one or more of Claims 1 to 6, characterized in that at least one of the microprocessors (for example, MPF) controls the multi-address calling of messages to subscriber devices of the communication system which are temporarily stored in one of the terminals.

## Revendications

1. Système de transmission d'informations avec communication de signaux vocaux, de données d'images et de données de textes entre des postes d'abonnés (TE) propres au système, qui sont constitués par une combinaison de terminaux, notamment un poste téléphonique (FeAp), un répondeur téléphonique (AB) et un télécopieur (FAX) et qui comporte au moins un microprocesseur (MP) disposé dans l'un des terminaux et qui commande les différentes fonctions des terminaux et/ou l'échange d'informations techniques de commutation entre un terminal et des centraux du système de transmission d'informations, le poste d'abonné appelé étant constitué par une combinaison d'un télécopieur (FAX) et d'un répondeur téléphonique (AB), qui sont raccordés respectivement à une ligne principale de raccordement (AL1, AL2) du réseau de transmission d'informations,
caractérisé par le fait
qu'une unité de raccordement (AE) est reliée à la ligne de raccordement (AL1) du télécopieur (FAX) et est raccordée par l'intermédiaire d'un câble de liaison (VL), au répondeur téléphonique (AB) et que conformément au principe d'une commande répartie, dans le cas d'un appel arrivant dans le télécopieur (FAX), le répondeur téléphonique (AB) établit automatiquement une liaison commutée pour la retransmission de signaux d'appel et/ou d'informations à un autre poste d'abonné du système de transmission d'informations.

2. Système de transmission d'informations avec communication de signaux vocaux, de données d'images et de données de textes entre des postes d'abonnés (TE) propres au système, qui sont constitués par une combinaison de terminaux, notamment un poste téléphonique (FeAp), un répondeur téléphonique (AB) et un télécopieur (FAX) et qui comporte au moins un microprocesseur (MP) disposé dans l'un des terminaux et qui commande les différentes fonctions des terminaux et/ou l'échange d'informations techniques de commutation entre un terminal et des centraux du système de transmission d'informations, le poste d'abonné appelé étant constitué par une combinaison d'un télécopieur (FAX) et d'un répondeur téléphonique (AB), qui sont raccordés respectivement à une ligne principale de raccordement (AL) du réseau de transmission d'informations,
caractérisé en ce
qu'après l'établissement d'une liaison entre le poste d'abonné appelant et un terminal raccordé de façon prioritaire, le microprocesseur (MPA), qui est associé à ce terminal et qui est relié à un dispositif de commutation (U) disposé dans la ligne principale de raccordement (AL), fixe le type de communication et, dans le cas où cela est nécessaire, exécute une commutation sur le terminal qui correspond au type de communication, et qu'après la détection de la fin de l'échange d'informations entre des postes d'abonnés appelant et appelé (TE) par un circuit (SE) d'identificatoin du courant de boucle, le microprocesseur (MPA) du terminal raccordé de façon prioritaire établit automatiquement une liaison commutée pour la retransmission de signaux d'appel et/ou d'informations à un autre poste d'abonné du système de transmission d'informations.

3. Système de transmission d'informations selon la revendication 1 ou 2, caractérisé en ce que le répondeur téléphonique (AB) comporte une mémoire intermédiaire (S) pour la mémorisation intermédiaire de l'information arrivant du poste d'abonné appelant et/ou une mémoire de textes d'annonces (SP), et que le microprocesseur (MP) du répondeur téléphonique (AB) déclenche l'établissement d'une seconde liaison sur la base d'une information de sélection mémorisée temporairement dans la mémoire (S), par l'intermédiaire de la ligne principale de raccordement (AL, AL2) et, lorsque le poste d'abonné appelé se signale, lit l'information contenue dans la mémoire intermédiaire (SP) ou dans la mémoire de textes indicateurs (SP) et commande la transmission d'informations.

4. Système de transmission d'informations selon la revendication 1, caractérisé en ce que le dispositif de raccordement (AE) comporte un circuit d'identification d'appels (RE), et que le signal de sortie du circuit d'identification (RE) est retransmis par l'intermédiaire du câble de jonction (VL) au microprocesseur (MPA) du répondeur téléphonique (AB).

5. Système de transmission d'informations selon la revendication 1, caractérisé en ce que le dispositif de raccordement (AE) possède un circuit (SE) d'identification du courant de boucle et que le dispositif de raccordement (AE) est raccordé au moyen du câble de jonction (VL) à une douille de contact d'alarme (AK) du répondeur téléphonique (AB).

6. Système de transmission d'informations selon la revendication 2, caractérisé en ce qu'un dispositif de sélection automatique et une mémoire d'annonces (SP'), reliée à ce dispositif, sont disposés dans le télécopieur (FAX) que dans le cas d'un appel arrivant et à la fin de l'échange d'informations entre un poste d'abonné appelant et le télécopieur (FAX), le dispositif de sélection automatique déclenche l'établis sement d'une liaison avec le poste d'abonné du système de transmission d'informations et que lorsque le poste d'abonné se signale, le microprocesseur (MPF) lit l'information mémorisée temporairement dans la mémoire d'annonces (SP').

7. Système de transmission d'informations selon une ou plusieurs des revendications 1 à 6, caractérisé en ce qu'au moins l'un des microprocesseurs (par exemple MPF) commande l'émission omnidirectionnelle d'informations, qui sont mémorisées temporairement dans l'un des terminaux, à des postes d'abonnés du système de transmission d'informations.
